# EUROPEAN PATENT APPLICATION

(11) **EP 3 670 466 A1**
(43) Date of publication of application: **24.06.2020**
(21) Application number: 18865189.7
(22) Date of filing: 10.09.2018
(51) Int. Cl.: C03C 27/12, B32B 17/10, B60J 1/00, C03B 23/023, C03C 3/083, C03C 3/085, C03C 3/087

(54) **LAMINATED GLASS FOR AUTOMOBILE, AND METHOD FOR MANUFACTURING SAME**

(30) Priority: 06.10.2017 JP 2017195577
(71) Applicant: Central Glass Company, Limited, Ube-shi, Yamaguchi 755-0001 (JP)
(72) Inventor: NAKAMURA Hiroki, Matsusaka-shi Mie 515-0001 (JP); MITAMURA Naoki, Matsusaka-shi Mie 515-0001 (JP); NAITO Takuma, Matsusaka-shi Mie 515-0001 (JP)
(74) Representative: Manitz Finsterwald Patent- und Rechtsanwaltspartnerschaft mbB
(86) International application number: PCT/JP2018/033386
(87) International publication number: WO 2019/069628

(57) **Abstract**

According to the present invention, there is provided a laminated glass in which vehicle interior- and exterior-side glass sheets can be easily formed into the same curved sheet even though the glass sheet of small thickness is used. A laminated glass for an automotive vehicle according to one embodiment of the present invention includes a thermoplastic intermediate film and curved first and second glass sheets disposed on vehicle exterior and interior sides, respectively, and opposed to each other with the thermoplastic intermediate film interposed therebetween, wherein a difference in annealing point temperature between the first and second glass sheets is in the range of ±5°C, wherein a difference in softening point temperature between the first and second glass sheets is in the range of ±5°C, wherein the first glass sheet has a glass composition with a FeO content of 0.1 mass% to 0.5 mass%, wherein the second glass sheet has a glass composition with a FeO content of 0 mass% to 0.05 mass%, wherein a thickness of the second glass sheet is 0.5 mm to 1.8 mm, and wherein a thickness of the first glass sheet is 1.1 times to 1.4 times the thickness of the second glass sheet.

## Description

### Field of the Invention

The present invention relates to a laminated glass for an automotive vehicle, and a manufacturing method thereof.

### Background Art

In automotive vehicles, improvements of energy efficiencies such as gasoline fuel consumption and electricity consumption are needed year by year. Further, weight reductions of component parts used in automatic vehicles are also needed. Under such circumstances, there is proposed an automotive laminated glass for use as a window glass of an automotive vehicle, which includes glass sheets of different thicknesses such that: the thickness of the exterior-side glass sheet is in the range of 1.45 mm to 1.8 mm; and the thickness of the interior-side glass sheet is in the range of 1.0 mm to 1.4 mm, i.e. smaller than that of the exterior-side glass sheet (see, for example, Patent Document 1).

Since the automotive laminated glass has a curved shape, two glass sheets need to be formed in the same curved shape. It is thus often the case that the two glass sheets are, in a state of being stacked together, heated to a temperature in the vicinity of the softening points of the respective glass sheets and then subjected to bending (see, for example, Patent Documents 2 and 3). In this method, however, the bending of the two glass sheets into the same curved shape becomes a technical problem. Patent Document 2 proposes a method of bending two stacked glass sheets in a forming furnace wherein the lower-side glass sheet is configured to be softened faster than the upper-side glass sheet so that the two glass sheets can be bent into the same curved shape even under the condition that the upper-side glass sheet (interior-side glass sheet) is more susceptible to heat (i.e. easier to bend) in the forming furnace, and discloses one configuration example in which the lower-side glass sheet is made higher in infrared absorptivity than the upper-side glass sheet. Patent Document 3 aims to address the problem that, in a process of bending with heating, a thin glass sheet is easier to bend than a thick glass sheet, and proposes a method of producing a laminated glass from glass sheets wherein the glass compositions of the respective glass sheets are adjusted such that the viscosity of the thick glass sheet becomes lower than the viscosity of the thin glass sheet in a bending temperature environment.

### Prior Art Documents

### Patent Documents

Patent Document 1: Japanese Translation of PCT International Application Publication No. JP-T-2013-525235
Patent Document 2: Japanese Laid-Open Patent Publication No. JP-H3-205321
Patent Document 3: International Publication No. WO 2014/054468

### Summary of the Invention

### Problems to be Solved by the Invention

For weight reduction of the automotive laminated glass, it is desirable to use the vehicle interior-side glass sheet of small thickness in order to avoid a decrease in the stiffness of the vehicle exterior-side glass sheet. However, the glass sheet of small thickness is easier to bend than the glass sheet of large thickness in the process of bending by heating as mentioned above. It is thus difficult to bend these two glass sheets into the same curved shape.

In view of the foregoing, it is an object of the present invention to provide a laminated glass structure in which vehicle interior- and exterior-side glass sheets can be easily formed into the same curved shape even when the glass sheet of small thickness is used.

### Means for Solving the Problems

According to one aspect of the present invention, there is provided a laminated glass for an automotive vehicle, comprising a thermoplastic intermediate film, a curved first glass sheet disposed on a vehicle exterior side and a curved second glass sheet disposed on a vehicle interior side, the first and second glass sheets being opposed to each other with the thermoplastic intermediate film interposed therebetween, wherein a difference in annealing point temperature between the first and second glass sheets is in the range of ±5°C, wherein a difference in softening point temperature between the first and second glass sheets is in the range of ±5°C, wherein the first glass sheet has a glass composition with a FeO content of 0.1 mass% to 0.5 mass%, wherein the second glass sheet has a glass composition with a FeO content of 0 mass% to 0.05 mass%, and wherein a thickness of the first glass sheet is 1.1 times to 1.4 times a thickness of the second glass sheet.

According to another aspect of the present invention, there is provided a method for manufacturing a laminated glass for an automotive vehicle, comprising: a forming step of, in a state that first and second glass sheets of flat shape are stacked together, heating the first and second glass sheets to a temperature in the vicinity of softening points of the first and second glass sheets, bending the first and second glass sheets into a desired curved shape by a self-weight bending process or press forming process, and then, cooling the first and second glass sheets; a laminating step of laminating a thermoplastic intermediate film between the curved first and second glass sheets; and a bonding step of bonding the thermoplastic intermediate film and the first and second glass sheets together by thermocompression bonding, wherein a difference in annealing point temperature between the first and second glass sheets is in the range of ±5°C, wherein a difference in softening point temperature between the first and second glass sheets is in the range of ±5°C, wherein the first glass sheet has a glass composition with a FeO content of 0.1 mass% to 0.5 mass%, wherein the second glass sheet has a glass composition with a FeO content of 0 mass% to 0.05 mass%, wherein a thickness of the second glass sheet is 0.5 mm to 1.8 mm, and wherein a thickness of the first glass sheet is 1.1 times to 1.4 times the thickness of the second glass sheet.

Bending of a glass sheet depends on the viscosity of the glass sheet. In the case where the first and second glass sheets are the same or similar in glass composition, the bending behaviors of the first and second glass sheets are expected to be equal under a static temperature condition irrespective of the thicknesses of the glass sheets. In an industrial manufacturing process, however, the first and second glass sheets are heated from room temperature to a bending temperature for a predetermined time period. Under such a dynamic temperature condition, the factors for the bending behaviors of the first and second glass sheets become more complicated.

It seems one solution to the above problem would be to adjust the glass compositions of the respective glass sheets such that the viscosity of the thick glass sheet becomes lower than the viscosity of the thin glass sheet. In this case, however, the glass sheets show different annealing point temperatures and different softening point temperatures. There thus arises a possibility that the factors for the bending behaviors of the first and second glass sheets becomes much more complicated. In order to avoid such a possibility, the laminated glass and the manufacturing method thereof according to the present invention are configured that: the difference in annealing point temperature between the first and second glass sheets is in the range of ±5°C; and the difference in softening point temperature between the first and second glass sheets is in the range of ±5°C.

In addition, the laminated glass and the manufacturing method thereof according to the present invention are configured that: the first glass sheet has a glass composition with a FeO content of 0.1 mass% to 0.5 mass%; the second glass sheet has a glass composition with a FeO content of 0 mass% to 0.05 mass%; and the thickness of the first glass sheet is 1.1 times to 1.4 times the thickness of the second glass sheet. As a consequence, the present invention achieves bending of the first and second glass sheets into the same curved shape.

Herein, the annealing point temperature and the softening point temperature can be determined according to JIS R 3103-2 (2001) and JIS R 2103-1 (2002), respectively.

### Effects of the Invention

The laminated glass for the automotive vehicle according to the present invention has a structure in which the vehicle interior- and exterior-side glass sheets can be easily formed into the same curved shape even when the glass sheet of small thickness is used. Therefore, the laminated glass for the automotive vehicle according to the present invention contributes to a weight reduction of the automotive vehicle.

### Brief Description of the Drawings

FIG. 1 is a schematic view showing (in cross section) a laminated glass for an automotive vehicle according to one embodiment of the present invention.
FIG. 2 is a schematic view showing a main part of a device for testing a bending behavior of a glass sheet sample under heating.
FIG. 3 is a schematic view showing how to measure the amount of bending of a glass sheet sample which has been bent under its own weight under heating.
FIG. 4 is a schematic view showing a step of forming first and second glass sheets of flat shape into a curved shape in a manufacturing method of the laminated glass according to one embodiment of the present invention.

### Detailed Description of the Embodiments

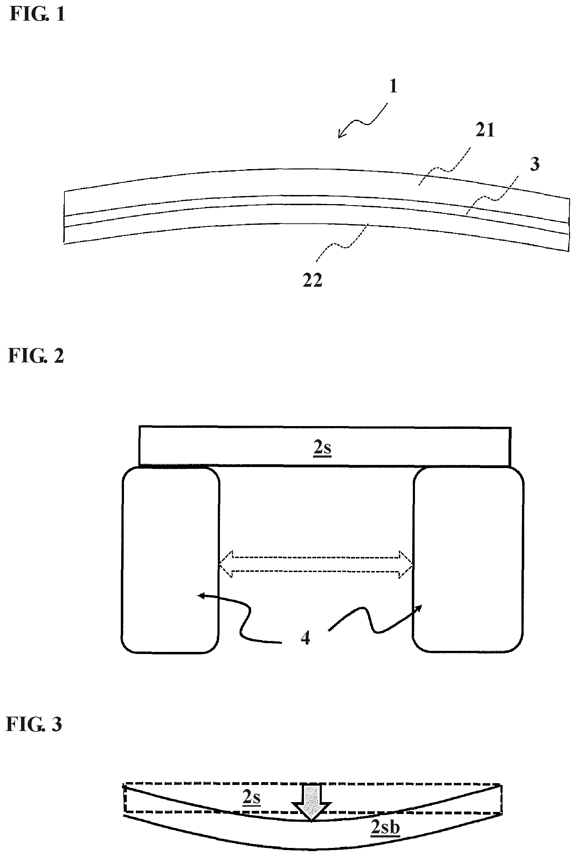

A laminated glass 1 for an automotive vehicle according to one embodiment of the present invention will be described in detail below with reference to the drawings. FIG. 1 is a schematic view showing a cross section of the laminated glass for the automotive vehicle according to one embodiment of the present invention. The laminated glass 1 for the automotive vehicle includes a thermoplastic intermediate film 3 and curved first and second glass sheets 21 and 22 opposed to each other with the thermoplastic intermediate film 3 interposed therebetween. The first and second glass sheets 21 and 22 are those formed by processing flat glass sheets into a curved shape. As the materials of the first and second glass sheets 21 and 22, there can be used soda-lime silicate glass as defined in ISO 16293-1 or any known glass composition such as aluminosilicate glass, borosilicate glass or the like. The first and second glass sheets 21 and 22 may be those formed by a float process.

A difference in annealing point temperature between the first and second glass sheets 21 and 22 is in the range of ±5°C; and a difference in softening point temperature between the first and second glass sheets 21 and 22 is in the range of ±5°C. The glass sheets, when both made of e.g. soda-lime silicate glass as defined in ISO 16293-1, have an annealing point temperature ranging from 500°C to 600°C and a softening point temperature ranging from 700°C to 800°C.

The glass sheets with such thermal properties can be of substantially the same glass composition or similar glass compositions. The glass compositions of the first and second glass sheets 21 and 22 are selected such that the differences in annealing point temperature and softening point temperature between the first and second glass sheets 21 and 22 are in the ranges of ±5°C and ±5°C, respectively. In order for the glass sheets to ensure substantially the same glass composition or similar glass compositions, each of the above property temperature differences may preferably be in the range of ±4°C, more preferably ±3°C, still more preferably ±2°C, yet more preferably ±1°C.

For example, the first glass sheet 1 has a glass composition in which by mass%: the content of SiO₂ ranges from 60% to 80%, preferably from 64% to 77%, more preferably from 67% to 74%; the content of Ai₂O₃ ranges from 0% to 20%, preferably from 0% to 12%, more preferably from 0% to 6%; the content of Na₂O ranges from 10% to 20%, preferably from 10% to 18%, more preferably from 10% to 15%; the content of K₂O ranges from 0% to 8%, preferably from 0% to 5%, more preferably from 0% to 3%; the content of MgO ranges from 0% to 15%, preferably from 0% to 12%, more preferably from 0% to 6%; the content of CaO ranges from 0% to 15%, preferably from 3% to 13%, more preferably from 5% to 10%; the content of iron oxide (in terms of Fe₂O₃) ranges from 0.2% to 2%, preferably from 0.2% to 1.8%, more preferably from 0.2% to 1.6%; and the content of FeO ranges from 0.1% to 0.50%, preferably from 0.1% to 0.45%, more preferably from 0.1% to 0.40%. The iron oxide content is expressed in terms of Fe₂O₃, and thus includes an overlap with the FeO content. The glass composition of the first glass sheet may contain optional components such as barium oxide, zirconium oxide and sulfur oxide in amounts that does not impair the gist of the present invention. For instance, the optional component may be contained in an amount up to 1.0 mass%.

The second glass sheet 22 has, for example, a glass composition in which by mass%: the content of SiO₂ ranges from 60% to 80%, preferably from 64% to 77%, more preferably from 67% to 74%; the content of Ai₂O₃ ranges from 0% to 20%, preferably from 0% to 12%, more preferably from 0% to 6%; the content of Na₂O ranges from 10% to 20%, preferably from 10% to 18%, more preferably from 10% to 15%; the content of K₂O ranges from 0% to 8%, preferably from 0% to 5%, more preferably from 0% to 3%; the content of MgO ranges from 0% to 15%, preferably from 0% to 12%, more preferably from 0% to 6%; the content of CaO ranges from 0% to 15%, preferably from 3% to 13%, more preferably from 5% to 10%; the content of iron oxide (in terms of Fe₂O₃) ranges from 0% to 0.15%, preferably from 0% to 0.13%, more preferably from 0% to 0.11%; and the content of FeO ranges from 0% to 0.05%, preferably from 0% to 0.13%, more preferably from 0% to 0.03%. The iron oxide content is expressed in terms of Fe₂O₃, and thus includes an overlap with the FeO content. The glass composition of the first glass sheet may contain optional components such as barium oxide, zirconium oxide and sulfur oxide in amounts that does not impair the gist of the present invention. For instance, the optional component may be contained in an amount up to 1.0 mass%.

Among the above-mentioned contents, the FeO content exerts an influence on the bending of the first and second glass sheets 21 and 22 from a flat shape into a curved shape under heating. An explanation will be now given of the results of tests on bending behaviors of various glass sheets under heating. FIG. 2 is a schematic view showing a main part of a device for testing a bending behavior of a glass sheet sample under heating. FIG. 3 is a schematic view showing how to measure the amount of bending of the glass sheet sample which has been bent under its own weight under heating.

Glass sheets used were: a glass sheet A having a glass composition containing SiO₂ (71 mass%), Al₂O₃ (2 mass%), Na₂O (13 mass%), K₂O (1.4 mass%), MgO (3.6 mass%), CaO (8.5 mass%) and iron oxide (0.5 mass% in terms of Fe₂O₃; 0.12 mass% as FeO) (annealing point temperature: 551°C, softening point temperature: 734°C); and a glass sheet B having a glass composition containing SiO₂ (72 mass%), Al₂O₃ (2 mass%), Na₂O (13 mass%), K₂O (1.3 mass%), MgO (3.7 mass%), CaO (8.4 mass%) and iron oxide (0.1 mass% in terms of Fe₂O₃; 0.02 mass% as FeO) (annealing point temperature: 551°C, softening point temperature: 733°C). These glass sheets were cut into flat glass sheet samples 2s (with a size of 60 mm × 45 mm). The bending behaviors of the respective glass sheet samples 2s were tested by the following procedure.

First, the test environment in which jigs 4 were arranged at an interval of 34 mm was set to 470°C. The glass sheet sample 2s was placed on the jigs 4 as shown in FIG. 2. The test environment was heated to 630°C, 640°C or 650°C at a heating rate of 6°C/min. While the test environment was held at 630°C, 640°C or 650°C for 1 minute, the glass sheet sample 2s was bent under its own weight. After that, the bent glass sheet sample 2sb was taken out of the test environment. A distance of the bent glass sheet sample 2sb as shown by an arrow in FIG. 3 with reference to the flat glass sheet sample 2s, that is, a so-called deflection amount of the glass sheet sample 2sb was measured as the amount of bending of the glass sheet sample 2sb.

Then, the thickness of the glass sheet B at which the deflection amount was the same as that of the glass sheet A of 1 mm thickness was determined. The deflection amount of the glass sheet A was respectively 0.2 mm, 0.35 mm and 0.5 mm when the maximum reaching temperature was 630°C, 640°C and 650°C. The thickness of the glass sheet B at which the deflection amount was the same as that of the glass sheet A was respectively 0.7 mm to 0.9 mm, 0.8 mm to 0.9 mm and 0.8 mm to 0.9 mm when the maximum reaching temperature was 630°C, 640°C and 650°C.

It is apparent from these test results that the bending behavior of the glass sheet is influenced by the FeO content of the glass sheet. In other words, the vehicle interior- and exterior-side glass sheets are easily formed into the same curved shape by controlling the FeO content of the glass composition of the first glass sheet to within the range of 0.2 mass% to 0.5 mass%, controlling the FeO content of the glass composition of the second glass sheet to within the range of 0 mass% to 0.05 mass% and controlling the thickness of the first glass sheet 21 to be 1.1 times to 1.4 times the thickness of the second glass sheet 22. The thickness ratio may be in the range of 1.1 times to 1.3 times in order to more easily form the glass sheets into the same curved shape.

The FeO content of the glass composition is influenced by not only the content of iron oxide (in terms of Fe₂O₃) but also the amounts of oxidizing agent and reducing agent contained in the raw glass materials and the oxidation reduction conditions of the inside atmosphere of the glass melting furnace. Cerium oxide, titanium oxide, manganese oxide, chromium oxide, cobalt oxide, nickel oxide, selenium and the like are known to influence the oxidation reduction conditions. For the purpose of adjusting the FeO content, these components may be contained in an amount of e.g. 0 mass% to 3 mass% in the glass composition of the first glass sheet or in the glass composition of the second glass sheet.

From the viewpoint of easily forming the glass sheets 21 and 22 into the same curved shape, the glass sheet 21 may have a thickness of 0.7 mm to 2 mm, preferably 0.7 mm to 1.7 mm, more preferably 0.7 mm to 1.4 mm; and the glass sheet 22 may have a thickness of 0.5 mm to 1.6 mm, preferably 0.5 mm to 1.4 mm, more preferably 0.5 mm to 1.1 mm, still more preferably 0.5 mm to 0.9 mm.

The thermoplastic intermediate film 3 functions to, when subjected to heating, bond the first and second glass sheets 21 and 22 together. As the material of the thermoplastic intermediate film 3, there can be used polyvinyl butyral (PVB), ethylene vinyl acetate (EVA), acrylic resin (PMMA etc.), urethane resin, polyethylene terephthalate (PET), cycloolefin polymer (COP) or the like. The intermediate film may be made of a plurality of resins.

One suitable manufacturing method of the automotive laminated glass 1 includes: a forming step of, in a state that first and second glass sheets 21 and 22 of flat shape are stacked together, heating the first and second glass sheets 21 and 22 to a temperature in the vicinity of softening points of the respective glass sheets, bending the first and second glass sheets 21 and 22 into a desired curved shape under such a heated condition; a laminating step of laminating the thermoplastic intermediate film 3 between the curved first and second glass sheets 21 and 22; and a bonding step of bonding the first glass sheet 21, the thermoplastic intermediate film 3 and the second glass sheet 22 together by thermo compression bonding.

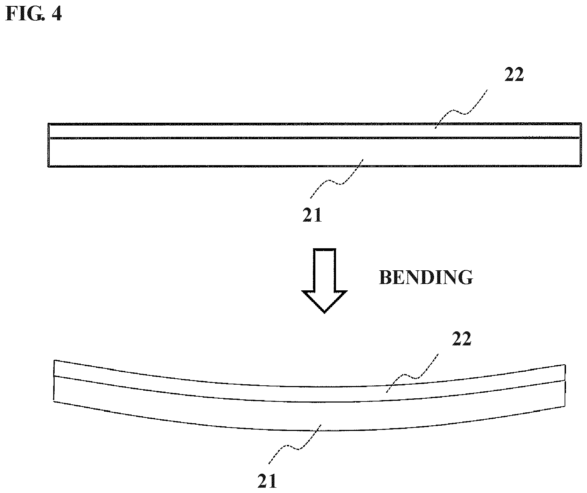

The forming step of the glass sheets will be explained below with reference to FIG. 4. FIG. 4 is a schematic view showing the step of forming the first and second glass sheets 21 and 22 of flat shape into a curved shape in the manufacturing method of the laminated glass 1 according to one embodiment of the present invention.

In the forming step, the first and second glass sheets 21 and 22 of flat shape are, in a state of being stacked together such that main surfaces of the first and second glass sheets are opposed to and face each other as shown in FIG. 4, heated to a temperature in the vicinity of the softening points of the respective glass sheets and bent into a desired curved shape. The temperature in the vicinity of the softening points of the glass sheets means the range from a temperature higher by 50°C than the softening point temperatures of the glass sheets to a temperature lower by 150°C than the softening point temperatures of the glass sheets. This step can be performed by a self-weight bending process e.g. passing the stacked glass sheets 21 and 22 through a heating furnace, with the stacked glass sheets 21 and 22 placed on a ring-shaped die, to soften the stacked glass sheets 21 and 22 by heating and allow the softened glass sheets to be bent into a desired shape under their own weights, and then, cooling the glass sheets. The glass sheets 21 and 22 may be subjected to preforming by a self-weight bending process, bent by a press forming process e.g. heating and pressurizing the glass sheets 21 and 22 between a ring-shaped die and a press die, and then, cooled. Among these forming processes, it is preferable to adopt a self-weight bending process.

In the forming step, the first and second glass sheets 21 and 22 may be transferred through a preheating zone in which both of the glass sheets are preheated and heated at a heating rate of 3 to 100°C/min from a temperature region of 200 to 400°C to the vicinity of the softening points, and then, transferred through a self-weight bending zone in which the glass sheets are bent into a desired curved shape and cooled. In this case, the glass sheets 21 and 22 can be transferred by transfer rolls.

It is preferable that the first glass sheet 21 and the second glass sheet 22 are stacked together via a release agent. As the release agent, there can suitably be used a ceramic powder that does not melt during the heating at the temperature in the vicinity of the softening points of the glass sheets. After the cooling subsequent to the bending, the stacked first and second glass sheets 21 and 22 are once separated apart from each other.

The thermoplastic intermediate film 3 is laminated between the concave main surface of the first glass sheet 21 and the convex main surface of the second glass sheet 22, thereby providing a laminate as a precursor of the laminated glass. In the bonding step, the laminate is subjected to thermocompression bonding by e.g. holding the laminate at 100 to 150°C for 15 to 60 minutes with the application of 1.0 to 1.5 Ma of pressure. There is thus obtained the automotive laminated glass 1 as shown in FIG. 2. For example, the thermocompression bonding can be performed in an autoclave. It is preferable that the laminate of the thermoplastic intermediate film 3 and the glass sheets 21 and 22 is subjected to degassing before the thermocompression bonding of the thermoplastic intermediate film 3 and the glass sheets 21 and 22.

### Description of Reference Numerals

- 1:: Automotive laminated glass
- 21:: First glass sheet
- 22:: Second glass sheet
- 2s:: Glass sheet sample
- 2sb:: Bent glass sheet sample
- 3:: Thermoplastic intermediate film
- 4:: Jig for bending test of glass sheet sample

## Claims

1. A laminated glass for an automotive vehicle, comprising a thermoplastic intermediate film, a curved first glass sheet disposed on a vehicle exterior side and a curved second glass sheet disposed on a vehicle interior side, the first and second glass sheets being opposed to each other with the thermoplastic intermediate film interposed therebetween,
wherein a difference in annealing point temperature between the first and second glass sheets is in the range of ±5°C,
wherein a difference in softening point temperature between the first and second glass sheets is in the range of ±5°C,
wherein the first glass sheet has a glass composition with a FeO content of 0.1 mass% to 0.5 mass%,
wherein the second glass sheet has a glass composition with a FeO content of 0 mass% to 0.05 mass%,
wherein a thickness of the second glass sheet is 0.5 mm to 1.8 mm, and wherein a thickness of the first glass sheet is 1.1 times to 1.4 times the thickness of the second glass sheet.

2. The laminated glass for the automotive vehicle according to claim 1, wherein the thickness of the first glass sheet is 0.7 mm to 2 mm.

3. The laminated glass for the automotive vehicle according to claim 1 or 2, wherein the thickness of the second glass sheet is 0.5 mm to 0.9 mm.

4. A method of manufacturing a laminated glass for an automotive vehicle, comprising;
a forming step of, in a state that first and second glass sheets of flat shape are stacked together, heating the first and second glass sheets to a temperature in the vicinity of softening points of the first and second glass sheets, bending the first and second glass sheets into a desired curved shape by a self-weight bending process or press forming process, and then, cooling the first and second glass sheets;
a separating step of once separating the stacked, curved first and second glass sheets from each other;
a laminating step of laminating a thermoplastic intermediate film between the curved first and second glass sheets; and
a bonding step of bonding the thermoplastic intermediate film and the first and second glass sheets together by thermocompression bonding,
wherein a difference in annealing point temperature between the first and second glass sheets is in the range of ±5°C,
wherein a difference in softening point temperature between the first and second glass sheets is in the range of ±5°C,
wherein the first glass sheet has a glass composition with a FeO content of 0.1 mass% to 0.5 mass%,
wherein the second glass sheet has a glass composition with a FeO content of 0 mass% to 0.05 mass%,
wherein a thickness of the second glass sheet is 0.5 mm to 1.8 mm, and wherein a thickness of the first glass sheet is 1.1 times to 1.4 times the thickness of the second glass sheet.

5. The method of manufacturing the laminated glass for the automotive vehicle according to claim 4, wherein, in the forming step, the first and second glass sheets are transferred through a preheating zone in which the first and second glass sheets are preheated, and then, transferred through a bending zone in which the first and second glass sheets are bent into a desired curved shape.
